# EUROPEAN PATENT SPECIFICATION

(11) **EP 2 760 628 B1**
(45) Date of publication and mention of the grant of the patent: **19.12.2018**
(21) Application number: 12832755.8
(22) Date of filing: 21.08.2012
(51) Int. Cl.: B23P 9/02, B64D 45/02, B23P 11/00

(54) **BUSHING FOR USE IN PROVIDING ELECTROMAGNETIC EFFECTS PROTECTION**
BUCHSE ZUR VERWENDUNG BEIM SCHUTZ ELEKTROMAGNETISCHER EFFEKTE
BAGUE POUR UTILISATION DANS LA FOURNITURE D'UNE PROTECTION VIS-À-VIS D'EFFETS ÉLECTROMAGNÉTIQUES

(30) Priority: 27.09.2011 US 201113246387
(43) Date of publication of application: 06.08.2014
(73) Proprietor: The Boeing Company, Chicago, IL 60606-1596 (US)
(72) Inventor: NEWBOLT, Christopher L., Seattle, Washington 98121 (US); LUDWIG (née AHERN), Rebecca Elizabeth, Chicago, IL 60606-2016 (US); IRWIN, James P., Renton, Washington 98059 (US); CORONADO, Peter A., Renton, Washington 98059 (US); JOHNSON, Benjamin A., Lynnwood, Washington 98087 (US)
(74) Representative: Witte, Weller & Partner Patentanwälte mbB
(86) International application number: PCT/US2012/051769
(87) International publication number: WO 2013/081688

(56) References cited:
- EP-A1- 1 803 526
- WO-A1-2005/103505
- WO-A1-2007/082077
- RANSOM ET AL: "Hole Protection with Expanded Grommets in Carbon Fiber Reinforced Plastic", GLOBAL MATERIAL TECHNOLOGY: SOARING TO NEW HORIZONS : 2009 SAMPE FALL TECHNICAL CONFERENCE & EXHIBITION, OCTOBER 19 - 22, 2009, WICHITA, KANSAS, COVINA : SOCIETY FOR THE ADVANCEMENT OF MATERIAL AND PROCESS ENGINEERING, 1 January 2009 (2009-01-01), pages 1-12, XP009165486, ISBN: 978-1-934551-06-6

## Description

### FIELD OF THE DISCLOSURE

The present disclosure relates generally to bushings and, more particularly, to bushing systems that provide electromagnetic protection in a composite structure.

### BACKGROUND

The paper "Hole Protection with Expanded Grommets in Carbon Fiber Reinforced Plastic", Ransom et al., Global Material Technology: Souring to New Horizons: 2009 Sampe Fall Technical Conference & Exhibition, October 19-22, 2009, Wichita, Kansas, Covina: Society for the Advancement of Material and Process Engineering, 1 January 2009, pages 1-12, ISBN: 978-1-934551-06-6, which is considered to be the closest prior art, discloses a fastening system comprising grommets installed in interference fit into a composite structure and showing to receive fasteners.

At least some known airplane wing fuel tanks are designed to prevent possible fuel ignition sources, such as sparking and/or arcing in the presence of flammable vapors, from occurring as a result of electromagnetic effects (EME) on an aircraft. During operation, aircraft may be subjected to EMEs from many different sources. For example, EME triggers within the aircraft environment may include, without limitation, currents resulting from equipment faults, precipitation static from fueling or flight, and/or direct and indirect lightning effects.

The threat of EME failures for composite wing fuel tanks are typically more severe than metal wing fuel tanks due to the non-homogeneous nature of composite materials and/or the lower intrinsic conductivity of composite structures, both of which may result in (1) a higher induced lightning current in substructure and/or internal systems due to the reduced skin conductivity and/or (2) a lower threshold of joints and/or interconnections involving composite materials to withstand current without sparking. Two architecture types used to reduce the risk of ignition sources resulting from in-systems installations include low-impedance systems and high-impedance systems.

Known low-impedance systems enable current to be conducted freely through the system. In at least some known low-impedance systems installed inside metal wing fuel tanks, the lightning current induced in the system is limited by a high electrical conductivity in the metallic structure, rendering it possible to install the system within the flammable region of the metallic structure. The lightning currents induced in systems installed in composite wing fuel tanks, on the other hand, are generally higher. As such, low-impedance systems installed in composite wing fuel tanks should be configured to tolerate a relatively higher current without sparking.

High impedance systems obstruct the flow of current through the system. Although at least some known high-impedance systems have a reduced current in metal and/or composite structures, at least some metallic connections used to install such systems may conduct relatively large induced lightning currents, such as connections of metallic components in a high impedance system on a tank penetration that are also coupled to a low impedance system outside the tank. As such, the connections used to install such systems should be configured to tolerate relatively high currents without sparking in the presence of flammable vapors. At least some known high-impedance systems develop higher voltages between the system components and the structure. Moreover, static charge may buildup within at least some known high-impedance systems because of the limited number of available ground paths within such systems. Furthermore, at least some known high-impedance systems require system components to be actively isolated from tank structure which increases complexity, component/part counts, and/or overall weight.

Therefore, it would be advantageous to have a system that takes into account at least some of the issues discussed above, as well as possibly other issues.

WO 2007/082077 A1 relates to a bushing kit and method for installing the same with a mandrel having a tapered region. The bushing kit comprises an inner member and an outer pushing. The inner member may include an inner surface having an engagement portion, such as a coating, plating and/or lining, such as a self-lubricating coating. The method of installing the bushing kit includes passing the tapered portion of the mandrel so the outer pushing to radially expand the outer bushing into the structural workpiece and possibly induce some amount of residual compressive stress in the structural workpiece.

EP 1 803 526 A1 relates to a mandrel assembly and a method of using the same. The mandrel assembly has a mandrel, a biasing member and an outer member. The biasing member biasly maintains the outer member in a first position. The biasing member is compressible to allow the outer member to move into a second position as the outer member is moved to an opening in the workpiece. In the first position, the outer member includes a maximum outer circumference that is larger than the opening of the structural workpiece. In the second position, the outer member includes a maximum outer circumference that fits within the opening of the structural workpiece.

WO 2005/103505 A1 relates to a method and an apparatus employing eccentric bushings. An alignment assembly comprises an outer bushing received in an aperture of a workpiece, and an eccentric bushing received in a passage of the inner bushing and rotated to align a passage of the eccentric bushing with passages of other workpieces and/or alignment assemblies. The bushings may be secured via cold work expansion.

### SUMMARY

In one aspect, a method is provided for use in providing electromagnetic effects protection in a composite structure. The method includes providing a bushing including a cylindrical body fabricated from a conductive material. The bushing is inserted within an opening defined in the composite structure such that the bushing is secured within the opening in an interference fit to facilitate transferring electromagnetic effects protection in the composite structure. The contact pressure between the bushing and the composite structure is sufficient to inhibit arcing during the transfers of induced lightning current from the bushing to the composite structure and has a numeric lower limit of 141 kg/cm2.

In another aspect, a system is provided. The system includes a composite structure including an opening defined therethrough. A bushing includes a cylindrical body sized to be secured within the opening in an interference fit to facilitate transferring electromagnetic effects protection in the composite structure. The cylindrical body is fabricated from a conductive material. The contact pressure between the bushing and the composite structure is sufficient to inhibit arcing during the transfers of induced lightning current from the bushing to the composite structure and has a numeric lower limit of 141 kg/cm2.

The features, functions, and advantages described herein may be achieved independently in various embodiments of the present disclosure or may be combined in yet other embodiments, further details of which may be seen with reference to the following description and drawings.

### BRIEF DESCRIPTION OF THE DRAWINGS

FIG. 1 is a plan view of an exemplary aircraft;
FIG. 2 is a cross-sectional view of an exemplary system, including a composite structure, that may be used with the aircraft shown in FIG. 1; and
FIG. 3 is a flowchart of an exemplary method that may be implemented to provide electromagnetic effects protection in the composite structure shown in FIG. 2.

Although specific features of various embodiments may be shown in some drawings and not in others, this is for convenience only. Any feature of any drawing may be referenced and/or claimed in combination with any feature of any other drawing.

### DETAILED DESCRIPTION

The subject matter described herein relates generally to bushings and, more particularly, to bushing systems that may be used to provide electromagnetic effects (EME) protection in a composite structure. In one embodiment, the composite structure housing a bushing includes an opening defined therethrough. The bushing includes a cylindrical body having an outer surface that is sized to be secured within the composite structure opening in an interference fit. The cylindrical body is fabricated from a conductive material that is configured to channel EME to, and/or from, the composite structure, and thus facilitates providing EME protection in the composite structure.

As used herein, an element or step recited in the singular and proceeded with the word "a" or "an" should be understood as not excluding plural elements or steps unless such exclusion is explicitly recited. Moreover, references to "one embodiment" of the present invention and/or the "exemplary embodiment" are not intended to be interpreted as excluding the existence of additional embodiments that also incorporate the recited features.

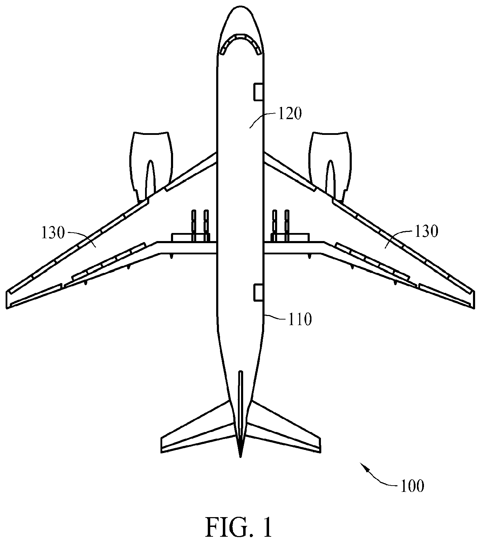

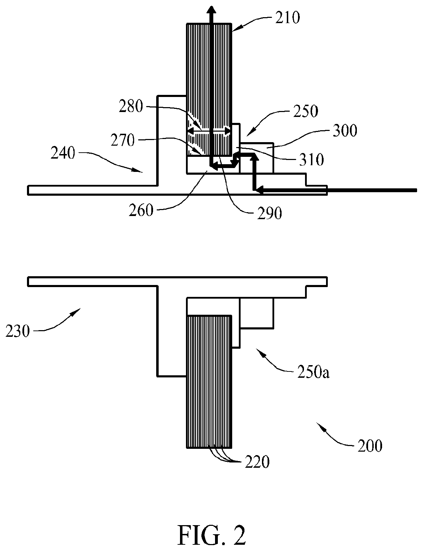

FIG. 1 is a plan view of an exemplary aircraft 100 including a body 110. In the exemplary embodiment, body 110 includes a fuselage 120 and a pair of wings 130. In the exemplary embodiment, each wing 130 includes a spar (shown in FIG. 2) that extends spanwise from fuselage 120 to carry flight loads and/or to support the weight of wings 130.

FIG. 2 is a cross-sectional view of an exemplary system 200 that may be used to provide EME protection in a spar 210. In the exemplary embodiment, spar 210 is a composite structure that is fabricated from a plurality of fibers 220. More particularly, in the exemplary embodiment, spar 210 is a structure fabricated from a composite material that includes, without limitation, a carbon-fiber-reinforced polymer (CFRP) material. Alternatively, spar 210 may be fabricated from any material or combination of materials that enables system 200 to function as described herein.

In the exemplary embodiment, a fitting 230 is mounted on and/or coupled to spar 210. More specifically, in the exemplary embodiment, spar 210 includes an opening 240 defined therethrough that is sized to receive fitting 230 and a bushing 250 therein for use in coupling fitting 230 to spar 210. For example, in the exemplary embodiment, a bushing 250 substantially circumscribes fitting 230 and is positioned radially between fitting 230 and spar 210, and a fastener 300 is positioned about fitting 230 to facilitate coupling fitting 230 to spar 210.

In the exemplary embodiment, bushing 250 includes a cylindrical body 260 that includes an outer surface 270 and that has a length 280. In the exemplary embodiment, body 260 is sized to be secured within opening 240 in an interference fit. More specifically, in the exemplary embodiment, bushing 250 is radially secured within opening 240 in a high-pressure interference fit such that bushing 250 is in robust contact with spar 210 along at least a portion of length 280. That is, outer surface 270 is substantially mated at high pressure in fay surface contact against inner surface 290 along length 280 when cylindrical body 260 is fully inserted within opening 240. For example, bushing 250 is positioned such that cylindrical body 260 channels electromagnetic effects at low electrical resistance between a composite structure (e.g., spar 210) and fitting 230. In the exemplary embodiment, the metal-to-fiber contact between bushing 250 and spar 210 has a low electrical resistance that facilitates inhibiting arcing and/or sparking during the transfers of induced lightning current. Alternatively, cylindrical body 260 may have any size and/or shape that enables system 200 to function as described herein.

Moreover, in the exemplary embodiment, bushing 250 is installed in opening 240 within spar 210 in an interference fit to provide high pressure contact and low electrical resistance between bushing and opening and has a coefficient of thermal expansion (CTE) that enables a desired degree of interference between bushing 250 and spar 210 to be substantially maintained for an operating temperature range of system 200. For example, in the exemplary embodiment, there is at least a numeric lower limit of pressure such as approximately 2,000 pounds per square inch (psi) between bushing 250 and spar 210 and a numeric upper limit of electrical resistance such as 10 milliohms between bushing 250 and spar 210 when bushing 250 is fully inserted within opening 240 at the operating temperature range of system 200. For instance, bushing 250 provides a high-pressure, interference-fit, low resistance (low impedance) electrical bond path directly from one or more bushings to one or more composite structure(s) (e.g., fitting 230, spar 210, or the like) that minimize matrix damage to the one or more composite structure(s). Alternatively, cylindrical body 260 may have any CTE and/or the interference fit may have any pressure that enables system 200 to function as described herein.

In the exemplary embodiment, outer surface 270 of cylindrical body 260 and inner surface 290 of opening 240 in spar 210 are substantially bare. That is, in the exemplary embodiment, fibers 220 of spar 210 are exposed and/or are in robust contact with outer surface 270 of cylindrical body 260 to facilitate increasing metal-to-fiber contact at high pressure and low electrical resistance between bushing 250 and spar 210. Alternatively, cylindrical body 260 and/or spar 210 may have any substance therebetween including, without limitation, lubricant, grease, and/or sealant, that enables system 200 to function as described herein.

In the exemplary embodiment, at least one securing mechanism 300 is used to secure fitting 230 in position with respect to spar 210 and bushing 250. For example, in the exemplary embodiment, securing mechanism 300 is a jamb nut. Alternatively, securing mechanism 300 may be any device and/or mechanism that enables system 200 to function as described herein. In the exemplary embodiment, bushing 250 is axially secured within opening 240 such that bushing 250 is in robust contact with fitting 230 and/or securing mechanism 300. Moreover, in the exemplary embodiment, bushing 250 includes a flange 310 that is coupled to and/or that extends from cylindrical body 260. In the exemplary embodiment, flange 310 facilitates increasing metal-to-metal contact between bushing 250 and securing mechanism 300.

In the exemplary embodiment, bushing 250 is fabricated from a conductive material. More specifically, in the exemplary embodiment, cylindrical body 260 and/or flange 310 are fabricated from a metal and/or metallic material. As such, in the exemplary embodiment, cylindrical body 260 and/or flange 310 provide a low-resistance electrical bond path between spar 210, fitting 230, and/or securing mechanism 300. More specifically, in the exemplary embodiment, bushing 250 provides a conduit that facilitates EME transference between fibers 220 and fitting 230 (e.g., hydraulic fitting). Alternatively, bushing 250 may be fabricated from any material or combination of materials that enables system 200 to function as described herein. In one embodiment, bushing 250 includes a plurality of layers that facilitate preventing sparking from entering a fuel tank. For example, in such an embodiment, a surface treatment may be applied to bushing 250, spar 210, and/or fitting 230 to facilitate increasing a conductivity and/or channeling of electromagnetic effects therethrough.

In the exemplary embodiment, at least one sealing mechanism (not shown) is positioned between fitting 230 and spar 210 such that the interface defined between fitting 230 and spar 210 is substantially impervious to leakage of hazardous fuel or fluid. As positioned, the sealing device is circumferential to and separates bushing 250 from the region with hazardous fuel and/or fuel vapors. As presented in the exemplary embodiment, the sealing device and bushing 250 represent a system offering multiple layers of protection to the installation as a system for the prevention of ignition source from the hazardous fuel vapors for compliance with the prevailing standards. As such, system 200 may be suitable for use in a fuel application and/or a hydraulic application such as for a hydraulic fitting on a composite bulkhead penetration of a fuel tank in an outboard composite wing of an airplane. For example, in the exemplary embodiment, sealing mechanism is a fillet seal and/or an O-ring. Alternatively, the sealing mechanism may be any device and/or mechanism that enables system 200 to function as described herein.

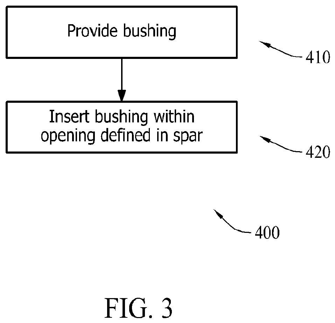

FIG. 3 is a flowchart of an exemplary method 400 that may be implemented to provide EME protection in spar 210 (shown in FIG. 2). In the exemplary embodiment, a bushing 250 (shown in FIG. 2) is provided 410 that includes a cylindrical body 260 (shown in FIG. 2) fabricated from a conductive material such as, without limitation, a metal and/or metallic material. In the exemplary embodiment, bushing 250 is inserted 420 within an opening 240 (shown in FIG. 2) defined in spar 210. More specifically, in the exemplary embodiment, bushing 250 is positioned to couple fitting 230 to spar 210.

As described in more detail above, in the exemplary embodiment, bushing 250 is sized to be secured within opening 240 in an interference fit. For example, in the exemplary embodiment, bushing 250 may be installed using, without limitation, a smart material and/or mandrel expansion, phase transformation, and/or press-fit/shrink fit methods. Alternatively, bushing 250 may be installed using any material, system, and/or method that enable system 200 to function as described herein. As such, in the exemplary embodiment, bushing 250 is positioned to conduct EME between fitting 230 and spar 210. For example, current may be channeled from fitting 230, through securing mechanism 300 and/or bushing 250, to spar 210. Alternatively, the current path may extend in any direction that enables system 200 to function as described herein.

The subject matter described herein relates generally to bushings and, more particularly, to a bushing system that facilitates providing electromagnetic effects protection in a composite structure. The embodiments described herein have multiple protective features in accordance with the prevailing regulatory standard to prevent an ignition source such as arcing and/or sparking in the presence of flammable fuel vapors. Within the system, the one or more bushings comprise one of the protective features to inhibit arcing and/or sparking and enable the system to comply with the regulatory standard to prevent ignition source. The embodiments described herein enable benefits associated with a composite spar and a low impedance system to be achieved. For example, the embodiments described herein facilitate reducing a part count, a weight, and/or number of drilled holes in the composite structure. Accordingly, the embodiments described herein facilitate reducing material costs, installation costs, and/or maintenance costs. Moreover, the embodiments described herein enable electrical contact between the bushing system and the composite structure to be increased. As such, the embodiments described herein facilitate reducing heating and/or sparking associated with lightning current.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of providing electromagnetic effects protection in a composite structure, said method comprising:
providing a bushing (250) including a cylindrical body (260) fabricated from a conductive material; and
inserting the bushing (250) within an opening (240) defined in the composite structure such that the bushing is secured within the opening in an interference fit to facilitate transferring the electromagnetic effects from the bushing (250) to the composite structure, wherein a contact pressure between the bushing and the composite structure is sufficient to inhibit arcing during the transfers of induced lightning current from the bushing (250) to the composite structure, wherein the contact pressure has a numeric lower limit of 141 kg/cm² [2000 psi].

2. The method in accordance with Claim 1 further comprising coupling a fitting to the bushing such that there is metal-to-metal contact therebetween.

3. The method in accordance with any preceding claim, wherein inserting the bushing within an opening further comprises positioning the bushing such that the cylindrical body channels electromagnetic effects between the composite structure and the fitting.

4. The method in accordance with any preceding claim further comprising positioning a sealing mechanism between the fitting and the composite structure

5. The method in accordance with any preceding claim further comprising providing the composite structure that is fabricated from a plurality of fibers that is fabricated from a carbon-fiber-reinforced polymer material.

6. The method in accordance with any preceding claim, inserting the bushing within an opening further comprises positioning the bushing in robust contact with the composite structure along at least a length of the cylindrical body.

7. A system comprising:
a composite structure (210) comprising an opening (240) defined therethrough;
a bushing (250) comprising a cylindrical body (260) sized to be secured within the opening in an interference fit to facilitate transferring electromagnetic effects from the bushing (250) to said composite structure (210), said cylindrical body fabricated from a conductive material, wherein a contact pressure between the bushing (250) and the composite structure (210) is sufficient to inhibit arcing during the transfers of induced lightning current from the bushing (250) to the composite structure, wherein the contact pressure has a numeric lower limit of 141 kg/cm² [2000 psi], and
a fitting assembly (230) coupled to said bushing (250).

8. The system in accordance with Claim 7, wherein the electrical resistance has a numeric upper limit of 10 milliohms between bushing (250) and spar (210).

9. The system in accordance with Claims 7 or 8, wherein said cylindrical body (260) is configured to channel electromagnetic effects between said composite structure (210) and said fitting (230).

10. The system in accordance with Claims 7 to 9 further comprising a sealing mechanism positioned between said fitting (230) and said composite structure (210).

11. The system in accordance with Claims 7 to 10, wherein said sealing mechanism circumscribes said bushing (250) such that the bushing is substantially concealed from a flammable vapor.

12. The system in accordance with Claims 7 to 11, wherein said composite structure (210) comprises a plurality of fibers (220), and wherein said plurality of fibers are substantially clean, bare and electrically conductive on an inner surface of the opening in the composite structure.

13. The system in accordance with Claims 7 to 12, wherein said composite structure (210) is fabricated from a carbon-fiber-reinforced polymer material.

14. The system in accordance with Claims 7 to 13, wherein said cylindrical body (260) has a length, said bushing positioned in robust contact with the composite structure along at least a portion of the length.

15. The system in accordance with Claims 7 to 14, wherein said bushing (250) comprises a flange (310).

## Patentansprüche

1. Verfahren zum Bereitstellen eines Schutzes vor elektromagnetischen Effekten in einer Verbundstruktur, wobei das Verfahren umfasst:
Bereitstellen einer Buchse (250) mit einem zylindrischen Körper (260), der aus einem leitenden Material hergestellt ist; und
Einsetzen der Buchse (250) in eine in der Verbundstruktur definierte Öffnung (240), so dass die Buchse innerhalb der Öffnung in einem Presssitz befestigt ist, um die Übertragung der elektromagnetischen Effekte von der Buchse (250) auf die Verbundstruktur zu erleichtern, wobei ein Anpressdruck zwischen der Buchse und der Verbundstruktur ausreicht, um einen Lichtbogen während der Übertragung des induzierten Blitzstroms von der Buchse (250) auf die Verbundstruktur zu verhindern, wobei der Anpressdruck eine numerische Untergrenze von 141 kg/cm2 [2000 psi] aufweist.

2. Verfahren nach Anspruch 1, ferner umfassend: Koppeln eines Anschlussstücks mit der Buchse, so dass dazwischen ein Metall-zu-Metall-Kontakt besteht.

3. Verfahren nach einem vorhergehenden Anspruch, wobei das Einsetzen der Buchse in eine Öffnung ferner das Positionieren der Buchse umfasst, so dass der zylindrische Körper elektromagnetische Effekte zwischen der Verbundstruktur und dem Anschlussstück leitet.

4. Verfahren nach einem vorhergehenden Anspruch, ferner umfassend: Positionieren eines Dichtungsmechanismus zwischen dem Anschlussstücks und der Verbundstruktur.

5. Verfahren nach einem vorhergehenden Anspruch, ferner umfassend: Bereitstellen der Verbundstruktur, die aus einer Vielzahl von Fasern hergestellt ist, die aus einem kohlefaserverstärkten Polymermaterial hergestellt ist.

6. Verfahren gemäß einem vorhergehenden Anspruch, wobei das Einsetzen der Buchse in eine Öffnung ferner umfasst: Positionieren der Buchse in robustem Kontakt mit der Verbundstruktur entlang mindestens einer Länge des zylindrischen Körpers.

7. System aufweisend:
eine Verbundstruktur (210), die eine durch sie hindurchgehende Öffnung (240) aufweist;
eine Buchse (250), die einen zylindrischen Körper (260) umfasst, der so bemessen ist, dass er in der Öffnung in einem Presssitz befestigt werden kann, um die Übertragung elektromagnetischer Effekte von der Buchse (250) auf die Verbundstruktur (210) zu erleichtern, wobei der zylindrische Körper aus einem leitenden Material hergestellt ist, wobei ein Anpressdruck zwischen der Buchse (250) und der Verbundstruktur (210) ausreicht, um einen Lichtbogen während der Übertragung des induzierten Blitzstroms von der Buchse (250) auf die Verbundstruktur zu verhindern, wobei der Anpressdruck eine numerische untere Grenze von 141 kg/cm2[2000 psi] aufweist, und
eine Anschlussstück-Anordnung (230), die mit der Buchse (250) gekoppelt ist.

8. System nach Anspruch 7, wobei der elektrische Widerstand eine numerische Obergrenze von 10 Milliohm zwischen Buchse (250) und Holm (210) aufweist.

9. System nach Anspruch 7 oder 8, wobei der zylindrische Körper (260) konfiguriert ist, um elektromagnetische Effekte zwischen der Verbundstruktur (210) und dem Anschlussstücks (230) zu leiten.

10. System nach den Ansprüchen 7 bis 9, ferner umfassend einen Dichtungsmechanismus, der zwischen dem Anschlussstücks (230) und der Verbundstruktur (210) angeordnet ist.

11. System nach den Ansprüchen 7 bis 10, wobei der Dichtungsmechanismus die Buchse (250) so umgibt, dass die Buchse vor einem brennbaren Dampf im Wesentlichen abgeschirmt ist.

12. System nach den Ansprüchen 7 bis 11, wobei die Verbundstruktur (210) eine Vielzahl von Fasern (220) umfasst, und wobei die Vielzahl von Fasern im Wesentlichen sauber, blank und elektrisch leitfähig auf einer Innenfläche der Öffnung in der Verbundstruktur ist.

13. System nach den Ansprüchen 7 bis 12, wobei die Verbundstruktur (210) aus einem kohlefaserverstärkten Polymermaterial hergestellt ist.

14. System nach den Ansprüchen 7 bis 13, wobei der zylindrische Körper (260) eine Länge aufweist, wobei die Buchse in robustem Kontakt mit der Verbundstruktur entlang mindestens eines Teils der Länge positioniert ist.

15. System nach den Ansprüchen 7 bis 14, wobei die Buchse (250) einen Flansch (310) umfasst.

## Revendications

1. Procédé de fourniture d'une protection contre des effets électromagnétiques dans une structure composite, ledit procédé consistant :
à fournir une douille (250) comprenant un corps cylindrique (260) fabriqué à partir d'un matériau conducteur ; et
à insérer la douille (250) dans une ouverture (240) définie dans la structure composite de telle sorte que la douille soit fixée dans l'ouverture dans un ajustement avec serrage pour faciliter le transfert des effets électromagnétiques de la douille (250) à la structure composite, dans lequel une pression de contact entre la douille et la structure composite est suffisante pour empêcher une production d'arc électrique pendant les transferts d'un courant de foudre induit de la douille (250) à la structure composite, dans lequel la pression de contact présente une limite inférieure numérique de 141 kg/cm² [2 000 psi].

2. Procédé selon la revendication 1, consistant en outre à coupler une pièce de fixation à la douille de telle sorte qu'il y ait un contact métal-métal entre ces dernières.

3. Procédé selon l'une quelconque des revendications précédentes, dans lequel l'insertion de la douille dans l'ouverture consiste en outre à positionner la douille de telle sorte que le corps cylindrique canalise des effets électromagnétiques entre la structure composite et la pièce de fixation.

4. Procédé selon l'une quelconque des revendications précédentes, consistant en outre à positionner un mécanisme d'étanchéité entre la pièce de fixation et la structure composite.

5. Procédé selon l'une quelconque des revendications précédentes, consistant en outre à fournir la structure composite qui est fabriquée à partir d'une pluralité de fibres qui est fabriquée à partir d'un matériau polymère renforcé par des fibres de carbone.

6. Procédé selon l'une quelconque des revendications précédentes, l'insertion de la douille dans une ouverture consiste en outre à positionner la douille en contact robuste avec la structure composite sur au moins une longueur du corps cylindrique.

7. Système comprenant :
une structure composite (210) comprenant une ouverture (240) définie à travers cette dernière ;
une douille (250) comprenant un corps cylindrique (260) dimensionné de sorte à être fixé dans l'ouverture dans un ajustement avec serrage pour faciliter le transfert d'effets électromagnétiques de la douille (250) à ladite structure composite (210), ledit corps cylindrique étant fabriqué à partir d'un matériau conducteur, dans lequel une pression de contact entre la douille (250) et la structure composite (210) est suffisante pour empêcher une production d'arc électrique pendant les transferts d'un courant de foudre induit de la douille (250) à la structure composite, dans lequel la pression de contact présente une limite inférieure numérique de 141 kg/cm² [2 000 psi], et
un ensemble pièce de fixation (230) couplé à ladite douille (250).

8. Système selon la revendication 7, dans lequel la résistance électrique présente une limite supérieure numérique de 10 milliohms entre une douille (250) et un longeron (210).

9. Système selon les revendications 7 ou 8, dans lequel ledit corps cylindrique (260) est configuré pour canaliser des effets électromagnétiques entre ladite structure composite (210) et ladite pièce de fixation (230).

10. Système selon les revendications 7 à 9, comprenant en outre un mécanisme d'étanchéité positionné entre ladite pièce de fixation (230) et ladite structure composite (210).

11. Système selon les revendications 7 à 10, dans lequel ledit mécanisme d'étanchéité circonscrit ladite douille (250) de telle sorte que la douille soit sensiblement cachée à une vapeur inflammable.

12. Système selon les revendications 7 à 11, dans lequel ladite structure composite (210) comprend une pluralité de fibres (220) et dans lequel ladite pluralité de fibres sont sensiblement épurées, nues et électroconductrices sur une surface interne de l'ouverture dans la structure composite.

13. Système selon les revendications 7 à 12, dans lequel ladite structure composite (210) est fabriquée à partir d'un matériau polymère renforcé par des fibres de carbone.

14. Système selon les revendications 7 à 13, dans lequel ledit corps cylindrique (260) présente une longueur, ladite douille étant positionnée en contact robuste avec la structure composite le long d'au moins une partie de la longueur.

15. Système selon les revendications 7 à 14, dans lequel ladite douille (250) comprend un rebord (310).
